# EUROPÄISCHE PATENTSCHRIFT

(11) **EP 2 431 190 B1**
(45) Veröffentlichungstag und Bekanntmachung des Hinweises auf die Patenterteilung: **11.09.2013**
(21) Anmeldenummer: 11172492.8
(22) Anmeldetag: 04.07.2011
(51) Int. Cl.: B41M 7/00, B41M 5/00, B32B 29/00

(54) **Verfahren zur Herstellung eines digitalbedruckten Werkstückes**
Method for manufacturing a digitally printed workpiece
Procédé de fabrication d'une pièce usinée imprimée numériquement

(30) Priorität: 17.09.2010 DE 102010037632
(43) Veröffentlichungstag der Anmeldung: 21.03.2012
(73) Patentinhaber: Theodor Hymmen Verwaltungs GmbH, 33613 Bielefeld (DE)
(72) Erfinder:
(74) Vertreter: Dantz, Jan Henning

(56) Entgegenhaltungen:
- WO-A1-2011/036141
- WO-A1-2011/036142
- WO-A2-2010/022418

## Beschreibung

Die Erfindung betrifft ein Verfahren zur Herstellung eines digitalbedruckten flächigen, bahnförmigen oder plattenförmigen Werkstückes, beispielsweise eine Küchenarbeitsplatte, eine Möbelfront, ein Laminatfußbodenteil oder ein dekoratives Laminat (HPL/CPL) mit einer dekorativen und widerstandsfähigen Oberfläche.

Zur Herstellung eines solchen Werkstückes wird nach dem Stand der Technik häufig ein digitales Druckverfahren, z.B. ein Tintenstrahldruckverfahren, eingesetzt. Der dazu aktuelle Stand der Technik sowie die Schwierigkeiten werden in der DE 10 2009 044 092.5 und DE 10 2009 044 091.7 beschrieben. Die beschriebenen Lösungsansätze für die Aufgabenstellung, ein gut funktionierendes, industrietaugliches digitales Druckverfahren einzusetzen und gleichzeitig eine widerstandsfähige Oberfläche mittels einer Melaminbeharzung und anschließender Aushärtung des Melaminharzes (Kondensationsreaktion) zu erzielen, lassen sich allerdings noch weiter verbessern.

Insbesondere können diese bekannten Verfahren in Bezug auf die Haftung zwischen der einzelnen bedruckten Lagen des Werkstücks, beispielsweise einer Papierbahn, und dem häufig darunter liegenden plattenförmigen Werkstück, z.B. einer Holzwerkstoffplatte wie einer Span- oder MDF-Platte noch verbessert werden. Ebenso ist es mit den in den beschriebenen Verfahren der DE 10 2009 044 092.5 und DE 10 2009 044 091.7 nicht immer möglich, einen hohen Farbauftrag zu realisieren, weil bei zu hohem Farbauftrag (z.B. mehr als 10 g/m²) die zugrundeliegende physikalische Haftung zwischen dem reagierenden Melaminharzgemisch und der acrylathaltigen Druckfarbe, im Falle der DE 10 2009 044 092.5, bzw. der lösemittelhaltigen Farbe, im Falle der DE 10 2009 044 091.7, nicht ausreichend ist.

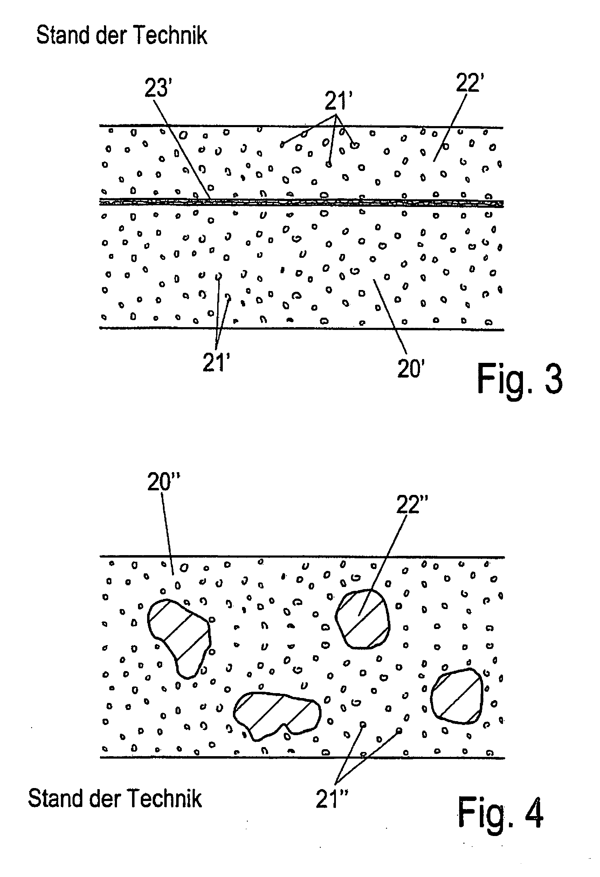

Zusätzlich lässt sich eine sehr hohe optische Brillanz und Qualität des Druckbildes nur dann erzeugen, wenn die gedruckten Tröpfchen einer Druckfarbe 22', 22", vgl. aus Fig. 3 und Fig. 4 möglichst nahe der Oberfläche des zu bedruckendes Werkstückes liegen.

In Fig. 3 ist als ein Werkstück 20' eine Papierbahn dargestellt, welche eine sogenannte Farbempfangsschicht 23' nahe der Oberfläche des Werkstückes, also der Papierbahn, enthält. Mit dieser Farbempfangsschicht wird erreicht, dass die Tröpfchen einer Druckfarbe 22' an der Oberfläche des Werkstückes 20' bleiben und so ein sehr brillantes Farbbild geben. Der Fachmann spricht hier davon, dass "der Druck gut steht".

Bei den Verfahren aus der DE 10 2009 044 092.5 und DE 10 2009 044 091.7 sinkt eine Druckfarbe 22" relativ weit in ein Werkstück 20", beispielsweise eine Papierbahn, ein. Dies ist in Fig. 4 dargestellt, wo sich Tröpfchen der Druckfarbe 22" tiefer im Inneren der Papierbahn 20" befinden. Die Verbindung, d.h. die Haftung zwischen der acrylathaltigen Druckfarbe 22", wie in der DE10 2009 044 092.5 beschrieben, und einer Imprägnierung mit einem Harzgemisch, bevorzugt ein Melaminharzgemisch 21" in Fig. 4 erfolgt hier nur physikalisch, d.h. das ausgehärtete (kondensierte) Melaminharz 21" umschtießt physikalisch die Tröpfchen der ausgehärteten, acrylathaltigen Druckfarbe 22". Eine chemische Bindung zwischen der acrylathaltigen Druckfarbe 22" und dem Melaminharz 21" findet nicht statt.

Die WO 2010/022418 A2 offenbart ein Verfahren zum Bedrucken eines Verbundwerkstoffes, welchen ggf. durch Deckschichten, sog. Overlays, entsprechende Abriebsfestigkeiten verliehen werden kann. Dabei wird von einer Standardgrafiktinte ausgegangen, zu der Acrylate oder Methacrylate zugesetzt wurden. Diese Acrylate und Methacrylate verfügen über Hydroxy-, Thiol-, Epoxy- oder Aminogruppen

Zusammengefasst ist es daher die Aufgabe der vorliegenden Erfindung, ein Verfahren zur Herstellung eines digital bedruckten flächigen, bahnförmigen oder plattenförmigen Werkstückes mit widerstandsfähigen Oberfläche und einer gegenüber dem Stand der Technik verbesserten Haftung der bedruckten Oberfläche zu den darunter liegenden Schichten, mit einer Möglichkeit zu einem höheren Farbauftrag sowie mit einem brillanteren und qualitativ hochwertigeren Druckbild darzustellen.

Diese Aufgabe wird durch das erfindungsgemäße Verfahren mit den Merkmalen des Anspruches 1 gelöst. Vorteilhafte Ausgestaltungen der Erfindung sind in den Unteransprüchen enthalten.

Dabei wird ein digital bedrucktes flächiges, bahnförmiges oder plattenförmiges Werkstück wie folgt hergestellt:

Zunächst erfolgt das Bereitstellen eines digitalen Datensatzes für die digitale Druckvorrichtung. In einer bevorzugten Ausführungsform handelt es sich hierbei um ein Dekorbild, z.B. die Nachbildung eines Holz- oder Fliesendekors. Es kann allerdings auch jedes andere digitale Bild, z.B. ein fotorealistisches Bild oder sonstiges Motiv verwendet werden.

Nach dem Zuführen des bedruckbaren Werkstückes zu einer Druckvorrichtung erfolgt das digitale Bedrucken des jeweiligen Werkstückes. Dabei kommt ein digitales Tintenstrahldruckverfahren zum Einsatz, welches eine acrylathaltige Farbe verwendet. Es kann dabei einfarbig gedruckt werden oder auch mittels mehrer acrylathaltiger Druckfarben. Besonders bevorzugt kommt ein Druck mit vier Farben zum Einsatz, wobei sich die Farben im Wesentlichen nur durch unterschiedliche Farbpigmente unterscheiden und ansonsten die gleiche acrylathaltige Basis haben.

Als zusätzliches Additiv in dieser acrylathaltigen Druckfarbe wird ein Vemetzer verwendet, der bei thermischer Aktivierung eine chemische Verbindung zwischen der acrylathaltigen Druckfarbe und dem zur Imprägnierung verwendeten Harzgemisch, besonders bevorzugt Melaminharzgemisch und/oder ein Phenolharzgemisch, herstellt. Dabei geht der Vemetzer erst während eines Pressvorgangs in einer Heißpresse eine chemische Bindung sowohl mit der Acrylatverbindung als auch mit der Harzverbindung ein.

Alternativ ist unter der Vorgabe, dass ein zugeführtes Harzgemisch und/oder eine acrylathaltige Druckfarbe als Bestandteil mindestens einen chemischen Vemetzer enthält auch zumindest ein Vemetzer verstanden, welcher chemisch am Acrylatmolekül und/oder am Harzmolekül gebunden vorliegt, beispielsweise als Prepolymer, und derart auf das Werkstück aufgebracht wird.

Als Vemetzer wird z.B. ein Isocyanat oder ein Molekül, welches die Isocyanat-Gruppe NCO-, z.B. ein Diisocyanat, enthält, verwendet.

Die verwendeten Vemetzer werden chemisch so eingestellt, dass sie erst oberhalb einer Temperatur von 50 °C, bevorzugt oberhalb von 70 °C, die Reaktion beginnen. Dies ist notwendig, um Vorreaktionen in der digitalen Druckeinrichtung mit Sicherheit auszuschließen.

Der Anteil der Vemetzer in der acrylathaltigen Druckfarbe beträgt 1-50 Volumenprozent, bevorzugt 5-45 Volumenprozent, besonders bevorzugt 15-30 Volumenprozent.

Das zu bedruckende Werkstück kann in einer beispielhaften Ausführungsform eine Papierbahn sein. Alternativ kann auch ein plattenförmiges Werkstück, wie z.B. eine Holzwerkstoffplatte oder eine Span- oder MDF-Platte als zu bedruckendes Werkstück verwendet werden. Nach dem Druck kann die acrylathaltige Druckfarbe ganz oder teilweise ausgehärtet, d.h. polymerisiert werden. Dabei wird bevorzugt eine strahlenhärtende Druckfarbe, welche mit entsprechenden Photoinitiatoren versehen ist, verwendet.

Dabei wird lediglich 30-60% der Strahlendosis benötigt, die bei einer strahlenhärtenden Druckfarbe notwendig wäre, die kein Vernetzungsmittel aufweist.

Nach der möglichen teilweisen oder vollständigen An- oder Aushärtung der acrylathaltigen Druckfarbe wird das Werkstück mit einem Harzgemisch imprägniert. Dabei wird ein Harzgemisch, insbesondere ein melaminhaltiges Harz, mit oder ohne Netzmittelanteil verwendet.

Imprägniert wird das Werkstück z.B. als endlose Papierbahn in einer Ausführungsform in einem wässrigen Harzbad. Nach dem Eintauchen in das Harzbad wird das Papier mit z.B. einem Quetschwalzenpaar auf eine vordefinierte Menge an Harz gebracht und danach in einem Trocknungskanal auf eine vordefinierte Restfeuchte zurückgetrocknet.

In einer alternativen Ausführungsform kann auch das zu bedruckende Werkstück eine Platte, vorzugsweise aus Holz, z.B. MDF- oder Spanplatte sein, welche nach dem Druck durch einen Walzenauftrag mit einem flüssigen Harzgemisch beschichtet wird. Dieses flüssige Harzgemisch kann dann ebenfalls in einem Trocknungsofen auf eine Restfeuchte zurückgetrocknet werden.

In einer weiteren alternativen Ausführungsform kann das Werkstück auch aus dem Aufbau: Papierlage oben, plattenförmiger Werkstoff, z.B. Holzwerkstoffplatte, in der Mitte, und eine Papierlage unten bestehen. Dabei können die oberen und untere Papierlage jeweils einzeln bedruckt und imprägniert werden und dann in einer Heizpresse mit der sich in der Mitte befindende Holzwerkstoffplatte verpresst werden.

In einer alternativen Ausführungsform kann das Imprägnieren auch durch Zuführung eines nicht bedruckten Papieres erfolgen, welches vorab imprägniert worden ist. In diesem Fall muss das eigentlich zu bedruckende Werkstück nicht selbst imprägniert werden, sondern wird nur mit einer oder mehreren Schichten von Papier, die vorher imprägniert worden sind, belegt. Der mögliche Aufbau des Werkstückes aus einer oder mehreren Papierlagen unten, imprägniert oder nicht imprägniert, bedruckt oder nicht bedruckt, einer Trägerplatte, vorzugsweise eine Holzwerkstoffplatte oder eine ähnliche Platte, in der Mitte und wiederum unterschiedlicher Mengen an Papierlagen, bedruckt oder nicht bedruckt, imprägniert oder nicht imprägniert, auf der Oberseite, kann variiert werden. Wichtig für die endgültige Abfolge ist die gewünschte Oberflächenausprägung, Härte, Kratzfestigkeit, Strukturtiefe, z.B. bei Einsatz einer Prägepresse, oder sonstige Eigenschaften des Werkstücks.

Nach dem Imprägnieren und dem Zusammenlegen der Schichten wird das bahn- oder plattenförmige bedruckte Werkstück in einer Heizpresse ausgehärtet. Dabei erfolgt gleichzeitig eine Kondensationsreaktion des Harzgemisches, bevorzugt Mefaminharzgemisches, sowie eine chemische Reaktion des Vernetzers in dem teilweise oder vollständig ausgehärteten Acrylat, so dass eine feste chemische Verbindung zwischen dem Acrylat (der Druckfarbe) und dem Harzgemisch erfolgt in einer sogenannten thermische Nachreaktion des Acrylats.

In einer besonderen Ausführungsform kann das zu bedruckende Werkstück als Papierbahn eine sogenannte Farbempfangsschicht enthalten. Diese Farbempfangsschicht kann in einer besonderen Ausführungsform z.B. aus einer Kaseinlösung 3-10 %, besonders bevorzugt 4-8 %, bezogen auf das Gewicht des Papiers, bestehen.

Diese Farbempfangsschicht dient dazu, während des digitalen Bedruckens die Farbtröpfchen der acrylathaltigen Druckfarbe an der Oberfläche des Werkstückes, hier des zu bedruckenden Papiers, zu behalten und dadurch eine hochbrillante Oberfläche mit einem qualitativ hochwertigen Druckbild zu erzeugen.

Im folgenden ist in den Figuren eine mögliche Ausgestaltungsform des erfindungsgemäßen Verfahrens dargestellt.

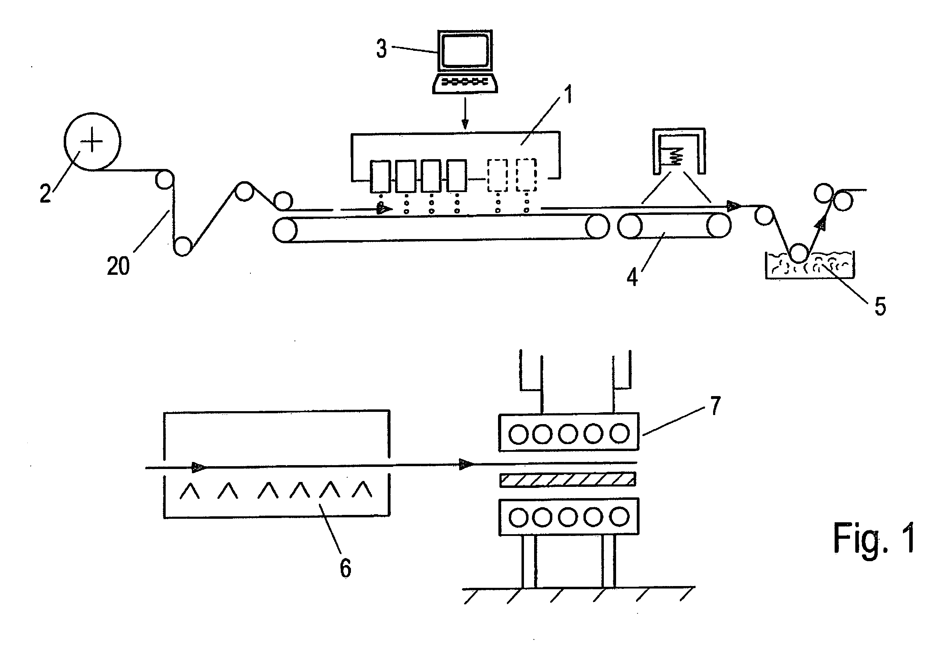

Fig. 1 zeigt eine Anlage mit einer digitalen Druckvorrichtung 1, die von einem Rechner 3 mit einem Druckbild gespeist wird. Von einer Rolle 2 aus wird durch eine Abwicklung von Papier ein bedruckbares Werkstück 20 der Druckvorrichtung 1 zugeführt. Eine optionale Einrichtung 4 dient teilweisen oder vollständigen An- oder Aushärtung der acrylathaltigen Druckfarbe im Anschluss an den Druckvorgang. Daran anschließend ist ein Harzbad 5 mit einem wässrigen Melaminharzgemisch angeordnet, in dem das Werkstück, hier das bedruckte Papier, getränkt wird und anschließend über ein Quetschwalzenpaar auf eine definierte Beharzungsmenge zurückgeführt wird. Anschließend wird das so getränkte Papier in einem Durchlauftrockner 6 auf eine definierte Restfeuchte zurückgetrocknet. Danach kann das Papier z.B. in Blattware geschnitten werden und anschließend in einer Heizpresse 7 verpresst werden. Diese Heizpresse kann in Form einer Taktpresse oder einer kontinuierlichen Doppelbandpresse ausgestaltet werden. In bevorzugten Ausführungsformen wird die Presse mit einem beheizten Druckkissen und einem Prägewerkzeug, z.B. einem geätzten Prägeblech oder einem Prägeband ausgestattet. Dadurch kann die Oberfläche des Werkstückes eine entsprechend gewünschte Struktur erhalten.

In der Heizpresse 7 kann das Werkstück entweder aus einer oder mehreren Papierschichten oder aus einem direkt bedruckten, plattenförmigen Werkstück oder aus einer Kombination aus plattenförmigen Werkstücken und Papierschichten bestehen.

Fig. 3 und Fig. 4 zeigen einen möglichen Aufbauten eines bedruckten Werkstückes nach dem Stand der Technik, bei dem das Werkstück als Papier 20', 20" ausgebildet ist. In diesem Papier 20" sind, wie in Fig. 4 dargestellt, einzelne Tröpfchen einer acrylathaltigen Druckfarbe 22" enthalten, welche von einem Harzgemisch 21" umschlossen sind. Hierdurch ergibt sich nach dem Stand der Technik eine physikalische Haftung, aber keine chemische Haftung.

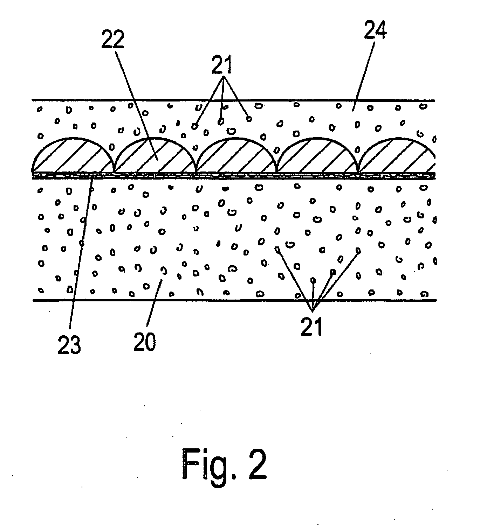

Fig. 2 zeigt eine Ausführungsvariante eines Produktes, welches nach dem erfindungsgemäßen Verfahren hergestellt wurde. Das zu bedruckende Werkstück 20 ist als Papier ausgebildet, welches in der abgebildeten beispielhaften Ausführungsform eine Farbempfangsschicht 23 an der Oberfläche aufweist. Auf diese Farbempfangsschicht 23 werden die Farbtröpfchen der acrylathaltigen Druckfarbe 22 inklusive eines Vernetzers durch die Vorrichtung aufgebracht. In dieser beispielhaften Ausführungsform ist eine weitere Papierschicht 24, die vorab mit einem Harzgemisch 21 beharzt worden ist, als sogenanntes Overlay aufgebracht. Der Vernetzer in der acrylathaltigen Druckfarbe 22 sorgt dafür, dass eine chemische Verbindung zwischen dem Acrylat aus der Druckfarbe und dem Melaminharzgemisch 21 hergestellt wird.

In einer bevorzugten Ausführungsvariante weist das Harzgemisch ein Netzmittel auf, wodurch die Oberflächenspannung verringert wird und das Harzgemisch besser in eine Werkstück, insbesondere eine Holzplatte oder ein Papier, eindringen kann. Geeignete Netzmittel und ein entsprechendes Verfahren zur Verarbeitung, beispielsweise durch Aufsprühen des Netzmittels, sind aus der DE 10 2009 044 092.5 bekannt und können für das Harzgemisch im vorliegende Verfahren verwendet werden.

Bezugszeichen
- 1: Druckvorrichtung
- 2: Rolle
- 3: Computer für digitalen Datensatz
- 4: Strahlungsquelle
- 5: Melaminharzbad
- 6: Trockner
- 7: Heizpresse

- 20: Werskstück, hier Papier
- 21: Melaminharz
- 22: acrylathaltige Druckfarbe
- 23: Farbempfangsschicht
- 24: Overlaypapier

## Patentansprüche

1. Verfahren zur Herstellung eines digitalbedruckten flächigen, bahnförmigen oder plattenförmigen Werkstückes (20) mit abriebfester Oberfläche, **gekennzeichnet durch** die folgenden Schritte:
A) Bereitstellen eines digitalen Datensatzes für eine digitale Druckvorrichtung (1);
B) Zuführen eines bedruckbaren Werkstückes (20) zu der Druckvorrichtung (1);
C) Digitales Bedrucken des bedruckbaren Werkstückes (20) mit der Druckvorrichtung unter Verwendung mindestens einer acrylathaltigen Druckfarbe (22); wobei ein zugeführtes Harzgemisch (5, 21) und/oder die acrylathaltige Druckfarbe (22) als Bestandteil mindestens einen chemischen Vernetzer enthält, der in einer Heizpresse (7) eine chemische Verbindung zwischen dem polymerisierten Acrylat der Druckfarbe (22) und dem Harzgemisch (5, 21) ausbildet, wobei der mindestens eine chemische Vemetzer so eingestellt ist, dass er erst oberhalb einer Temperatur von 50° die Reaktion beginnt, und
D) Aushärten des Harzgemisches (5, 21) mittels der Heizpresse (7) bei gleichzeitiger chemischer Reaktion des Vernetzers mit dem polymerisierten Acrylat der Druckfarbe (22) und dem Harzgemisch,
E) wobei als mindestens einen chemischen Vemetzer ein Isocyanat oder ein Molekül, welches die Isocyanat-Gruppe enthält, verwendet wird.

2. Verfahren nach Anspruch 1, **dadurch gekennzeichnet, dass** nach dem Verfahrensschritt C) ein teilweises oder vollständiges An- oder Aushärten der acrylathaltigen Druckfarbe (22) erfolgt, bevorzugt durch Strahlenhärtung (4).

3. Verfahren nach Anspruch 1 oder 2, **dadurch gekennzeichnet, dass** zum Bedrucken in Verfahrensschritt C) eine acrylathaltigen Druckfarbe (22), die den chemischen Vemetzer enthält, verwendet wird.

4. Verfahren nach einem der oben stehenden Ansprüche, **dadurch gekennzeichnet, dass** vor dem Verfahrensschritt D), vorzugsweise im Anschluss an den Verfahrensschritt C), eine Imprägnierung eines bedruckten Werkstückes mit dem Harzgemisch (5, 21) erfolgt.

5. Verfahren nach einem der oben stehenden Ansprüche, **dadurch gekennzeichnet, dass** vor dem Verfahrensschritt B) eine Imprägnierung des bedruckbaren Werkstückes (20) mit dem Harzgemisch (5, 21) erfolgt.

6. Verfahren nach einem der oben stehenden Ansprüche, **dadurch gekennzeichnet, dass** als bedruckbares Werkstück (20) ein Papier verwendet wird, welches in Verfahrensschritt D) gemeinsam mit einem plattenförmigen Werkstück, bevorzugt mit einer Holzwerkstoffplatte, besonders bevorzugt mit einer Span- oder MDF-Platte, in der Heizpresse (7) zu einem fest verbundenen Werkstück verpresst wird.

7. Verfahren nach einem der oben stehenden Ansprüche, **dadurch gekennzeichnet, dass** die chemische Reaktion des Vernetzers mit der acrylathaltigen Druckfarbe (22) und dem Harzgemisch (5, 21) erst oberhalb einer Temperatur von 50 °C, bevorzugt oberhalb von 70 °C, beginnt.

8. Verfahren nach einem der oben stehenden Ansprüche, **dadurch gekennzeichnet, dass** als ein Vemetzer eine Substanz oder ein Substanzgemisch mit Gewichtsanteilen von 50-100 %, bevorzugt Gewichtsanteilen von 80-99,5% an Isocanaten oder Moleküle, die zumindest eine Isocanat-Gruppe NCO- enthalten, verwendet wird..

9. Verfahren nach einem der oben stehenden Ansprüche, **dadurch gekennzeichnet, dass** als bedruckbares Werkstück (20) ein Papier, welches eine Farbempfangsschicht (23) enthält, verwendet wird

10. Verfahren nach einem der oben stehenden Ansprüche, **dadurch gekennzeichnet, dass** als Farbempfangsschicht (23) Kasein mit einem Gewichtsanteil von 2-15 %, bevorzugt 4-8 %, verwendet wird.

11. Verfahren nach einem der oben stehenden Ansprüche, **dadurch gekennzeichnet, dass** vor dem Verfahrensschritt D) ein bedrucktes Werkstück mit zumindest einem nicht bedrucktem, aber imprägnierten Werkstück zu einem Paket zusammengelegt wird.

12. Verfahren nach einem der oben stehenden Ansprüche, **dadurch gekennzeichnet, dass** das Aushärten des Harzgemisches (5, 21) bei einer Temperatur von mehr als 145°C, vorzugsweise mehr als 180°C, erfolgt.

13. Verfahren nach einem der oben stehenden Ansprüche, **dadurch gekennzeichnet, dass** das Aushärten des Harzgemisches (5, 21) unter einem Flächendruck von mehr als 20 bar, bevorzugt mehr als 35 bar, erfolgt.

14. Verfahren nach einem der oben stehenden Ansprüche, **dadurch gekennzeichnet, dass** der Vemetzer während des Verfahrensschrittes D) eine chemische Bindung sowohl mit dem polymerisierten Acrylat der Druckfarbe (22) als auch mit dem Harzgemisch (5, 21) eingeht.

15. Verfahren nach einem der obenstehenden Ansprüche, **dadurch gekennzeichnet, dass** das Harzgemisch (5, 21) ein Netzmittel aufweist.

## Claims

1. Method for manufacturing a digitally printed flat, web-like or plate-like workpiece (20) having an abrasion-resistant surface, **characterized by** the following steps:
A) providing a digital data set for a digital printing device (1);
B) feeding a printable workpiece (20) to the printing device (1);
C) digitally printing the printable workpiece (20) with the printing device by using at least one acrylate-containing printing ink (22); a resin mixture (5, 21) that is supplied and/or the acrylate-containing printing ink (22) containing as a constituent at least one chemical binder which, in a hot press (7), forms a chemical compound between the polymerized acrylate of the printing ink (22) and the resin mixture (5, 21), the at least one chemical binder being adjusted such that it begins the reaction only above a temperature of 50°, and
D) hardening the resin mixture (5, 21) by means of the hot press (7) with a simultaneous chemical reaction of the binder with the polymerized acrylate of the printing ink (22) and the resin mixture,
E) the at least one chemical binder used being an isocyanate or a molecule which contains the isocyanate group.

2. Method according to Claim 1, **characterized in that,** following method step C), partial or complete setting or hardening of the acrylatecontaining printing ink (22) is carried out, preferably by radiation hardening (4).

3. Method according to Claim 1 or 2, **characterized in that,** for the printing in method step C), an acrylate-containing printing ink (22) which contains the chemical binder is used.

4. Method according to one of the above claims, **characterized in that**, before method step D), preferably following method step C), a printed workpiece is impregnated with the resin mixture (5, 21).

5. Method according to one of the above claims, **characterized in that,** before method step B), the printable workpiece (20) is impregnated with the resin mixture (5, 21).

6. Method according to one of the above claims, **characterized in that** the printable workpiece (20) used is a paper which, in method step D), is pressed in the hot press (7) into a firmly bonded workpiece, together with a plate-like workpiece, preferably with a wood material board, particularly preferably with a chipboard or MDF board.

7. Method according to one of the above claims, **characterized in that** the chemical reaction of the binder with the acrylate-containing printing ink (22) and the resin mixture (5, 21) begins only above a temperature of 50°C, preferably above 70°C.

8. Method according to one of the above claims, **characterized in that** the binder used is a substance or substance mixture having proportions by weight of 50-100%, preferably proportions by weight of 80-99.5%, of isocyanates or molecules which contain at least one isocyanate group NCO-.

9. Method according to one of the above claims, **characterized in that** the printable workpiece (20) used is a paper which contains a colour-receiving layer (23).

10. Method according to one of the above claims, **characterized in that** the colour-receiving layer (23) used is casein with a proportion by weight of 2-15%, preferably 4-8%.

11. Method according to one of the above claims, **characterized in that**, before method step D), a printed workpiece is laid together with at least one non-printed but impregnated workpiece to form a package.

12. Method according to one of the above claims, **characterized in that** the resin mixture (5, 21) is hardened at a temperature of more than 145°C, preferably more than 180°C.

13. Method according to one of the above claims, **characterized in that** the resin mixture (5, 21) is hardened under a surface pressure of more than 20 bar, preferably more than 35 bar.

14. Method according to one of the above claims, **characterized in that** during method step D), the binder enters into a chemical bond both with the polymerized acrylate of the printing ink (22) and with the resin mixture (5, 21).

15. Method according to one of the above claims, **characterized in that** the resin mixture (5, 21) has a wetting agent.

## Revendications

1. Procédé de réalisation d'une pièce (20) en forme de bande ou de plaque munie d'une surface d'impression numérique ayant une surface supérieure résistant à l'abrasion,
procédé **caractérisé par** les étapes suivantes consistant à :
A) fournir un jeu de données numériques à un dispositif d'impression numérique (1),
B) alimenter le dispositif d'impression (1) avec une pièce à imprimer (20),
C) faire une impression numérique de la pièce à imprimer (20) avec le dispositif d'impression en utilisant au moins une encre contenant un acrylate (22), le mélange de résine fourni (5, 21) et/ou l'encre contenant l'acrylate (22) faisant partie d'au moins un agent de réticulation chimique qui développe une liaison chimique dans une presse chauffante (7) entre l'acrylate polymérisé de l'encre (22) et le mélange de résine (5, 21), au moins un agent de réticulation chimique étant réglé pour que la réaction ne commence qu'au-delà d'une température de 50°C, et
D) faire durcir le mélange de résine (5, 21) à l'aide de la presse chauffante (7) avec en même temps une réaction chimique de l'agent de réticulation avec l'acrylate polymérisée de l'encre (22) et du mélange de résine,
E) en utilisant au moins comme agent de réticulation chimique un isocyanate ou une molécule contenant le groupe isocyanate.

2. Procédé selon la revendication 1,
**caractérisé en ce que**
selon l'étape de procédé C) on effectue une amorce de durcissement ou un durcissement complet ou partiel de l'encre (22) contenant l'acrylate, de préférence en faisant durcir par un rayonnement (4).

3. Procédé selon la revendication 1 ou 2,
**caractérisé en ce que**
pour imprimer dans l'étape de procédé C) on utilise une encre d'impression (22) contenant de l'acrylate et un agent de réticulation chimique.

4. Procédé selon l'une des revendications précédentes,
**caractérisé en ce qu'**
avant l'étape de procédé D), de préférence en liaison avec l'étape de procédé C), on imprègne la pièce à imprimer avec le mélange de résine (5, 21).

5. Procédé selon l'une des revendications précédentes,
**caractérisé en ce qu'**
avant l'étape de procédé B) on imprègne la pièce (20) à imprimer avec le mélange de résine (5, 21).

6. procédé selon l'une des revendications précédentes,
**caractérisé en ce que**
comme produit à imprimer (20), on utilise un papier qui dans l'étape de procédé D) est pressé en commun avec une pièce en forme de plaque, de préférence une plaque à base de bois et d'une manière particulièrement préférentielle avec une plaque de copeaux ou de médium MDF dans une presse chauffante (7) pour obtenir un produit solidaire.

7. Procédé selon l'une des revendications précédentes,
**caractérisé en ce que**
la réaction chimique de l'agent de réticulation avec l'encre contenant de l'acrylate (22) et le mélange de résine (5, 21), se fait à une température supérieure à 50°C de préférence supérieure à 70°C.

8. Procédé selon l'une des revendications précédentes,
**caractérisé en ce que**
comme agent réticulant, on utilise une substance ou un mélange de substances ayant une composition pondérale de 50-100 % de préférence de 80-99,5 % d'isocyanate ou de molécules contenant au moins un groupe isocyanate NCO.

9. Procédé selon l'une des revendications précédentes,
**caractérisé en ce que**
le produit à imprimer (20) est un papier qui contient une couche réceptrice d'encre (23).

10. Procédé selon l'une des revendications précédentes,
**caractérisé en ce que**
la couche réceptrice d'encre (23) est de la caséine avec une teneur en poids de 2-15 % et de préférence 4-8 %.

11. Procédé selon l'une des revendications précédentes,
**caractérisé en ce qu'**
avant l'étape D) on assemble un produit à imprimer avec au moins un produit non-imprimé mais imprégné pour former un paquet.

12. Procédé selon l'une des revendications précédentes,
**caractérisé en ce que**
le durcissement du mélange de résine (5, 21) se fait à une température supérieure à 145°C de préférence supérieure à 180°C.

13. Procédé selon l'une des revendications précédentes,
**caractérisé en ce que**
le durcissement du mélange de résine (5, 21) se fait sous une pression surfacique supérieure à 20 bars et de préférence supérieure à 35 bars.

14. Procédé selon l'une des revendications précédentes,
**caractérisé en ce que**
l'agent de réticulation participe pendant l'étape de procédé D) à une liaison chimique à la fois avec l'acrylate polymérisé de l'encre d'impression (22) et avec le mélange de résine (5, 21).

15. Procédé selon l'une des revendications précédentes,
**caractérisé en ce que**
le mélange de résine (5, 21) comporte un agent de réticulation.
